(19) Europäisches Patentamt

European Patent Office

Office européen des brevets

(11) **EP 1 387 516 A1**

(12) **EUROPEAN PATENT APPLICATION**

(43) Date of publication:
**04.02.2004 Bulletin 2004/06**

(51) Int Cl.7: **H04L 1/00**

(21) Application number: **02255316.8**

(22) Date of filing: **30.07.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **Agilent Technologies, Inc. - a Delaware
corporation -
Palo Alto, CA 94303-0870 (US)**

(72) Inventors:
• **Andries, Alvin, Agilent Tech.Belgium, S.A/N.V
3110 Rotselaar (BE)**

• **Vandenhoeck, Roel,
Agilent Tech.Belgium, S.A/N.V
3110 Rotselaar (BE)**
• **Dunphy, Stephen,
Agilent Tech.Belgium, S.A/N.V
3110 Rotselaar (BE)**

(74) Representative: **Coker, David Graeme
Agilent Technologies UK Ltd,
Legal Department,
M/S CSC1GM2,
Eskdale Road,
Winnersh Triangle
Wokingham, Berks RG41 5DZ (GB)**

(54) **Blind transport format detection in spread spectrum receivers**

(57)     The present invention is related to a blind transport format detection method for detecting the transport format of a spread spectrum signal, comprising the steps of:

• initialising a signal path cost threshold value to a predetermined value D,
• calculating the signal path cost for the minimum end bit position
• comparing it to the threshold value, and
• in case the signal path cost is lower or equal to the threshold value the method further comprises after the comparing step a signal validation step, and the step of setting a valid end bit position variable to the current end bit position $n_{end}$, and
• repeating the steps of calculating, comparing and optionally validation and valid end bit position variable setting for incremental values of end bit position until the maximal end bit position is reached,

characterised in that the method further comprises the step of setting the threshold value to the calculated signal path cost in case the signal validation step is successful and before incrementing the end bit position.

Fig. 4

## Description

## Field of the invention

The present invention is related to a receiver for IMT-2000 spread-spectrum signals, more particularly to providing a blind transport format detection system for spread spectrum signal receivers.

## State of the art

In spread spectrum signal transmissions, transport formats of the signals can differ, making it necessary to detect the signal's transport format before the receiver of the signal can decode it. Signal transport format is usually detected by Transport Format Combination Indicator (TFCI) lookup. However, this can only be done when the transport format combination used is mentioned in the TFCI field. In other cases, so-called blind detection will be necessary.

The 3GPP TS 25.212 specification describing the Layer 1 multiplexing and channel coding in the FDD mode of UTRA requires the implementation of a mechanism referred to as "Explicit Blind Transport Format Detection". This mechanism must detect the transport format (TF) of a Transport Channel (TrCH) when the transport format has not been signalled using the TFCI field.

Several blind transport format detection algorithms are available, blind transport format detection using received power ratio and blind transport format detection using CRC are well known.

The 3GPP TS 25.212 specification proposes such a solution. For the multiple transport format case (the possible data rates are 0, ..., (full rate)/r, ..., full rate, and CRC is transmitted for all transport formats), blind transport format detection using CRC can be used.

However, the known prior art solutions show several shortcomings that are addressed in the present invention.

## Aims of the invention

The present invention aims to provide a novel and more efficient method to perform blind transport format detection of a spread spectrum transmission signal.

## Summary of the invention

The present invention concerns in a first aspect a blind transport format detection method for detecting the transport format of a spread spectrum signal, comprising the steps of:

- initialising a signal path cost threshold value to a predetermined value D,
- calculating the signal path cost for the minimum end bit position

- comparing it to the threshold value, and
- in case the signal path cost is lower or equal to the threshold value the method further comprises after the comparing step a signal validation step, and the step of setting a valid end bit position variable to the current end bit position $n_{end}$, and
- repeating the steps of calculating, comparing and optionally validation and valid end bit position variable setting for incremental values of end bit position until the maximal end bit position is reached,

characterised in that the method further comprises the step of setting the threshold value to the calculated signal path cost in case the signal validation step is successful and before incrementing the end bit position.
In the blind transport format according to the present invention, the step of calculating preferably comprises the step decoding the spread spectrum signal. The step of decoding comprises preferably a convolutional decoding step, advantageously a Viterbi decoding step.
In the blind transport format according to the present invention, the signal validation step preferably comprises a CRC test.
A second aspect of the present invention comprises a computer program product for detecting the transport format of a spread spectrum signal, arranged to be executed on a computer, comprising:

- Means for initialising a signal path cost threshold value to a predetermined value D,
- Means for calculating the signal path cost for the minimum end bit position
- Means for comparing it to the threshold value, and
- Means for performing a signal validation step,
- Means for setting a valid end bit position variable to the current end bit position $n_{end}$, and
- Means for incrementing the end bit position,

characterised in that the software program product further comprises means for setting the threshold value to the calculated signal path cost before incrementing the end bit position in case the signal validation step is successful.
Another aspect of the present invention is an integrated circuit comprising means for executing all the steps of the method of the present invention.
Another aspect of the present invention is a receiver for IMT-2000 spread-spectrum signals comprising means for executing all the steps of the method of the present invention.

## Short description of the drawings

Fig. 1 represents an example of an input signal for a blind transport format detection of data with variable number of bits.

Fig. 2 shows a decoder trellis diagram.

Fig. 3 represents the basic processing flow of blind transport format detection according to the prior art solution.

Fig. 4 represents the processing flow of blind transport format detection according to the present invention.

## Detailed description of the invention

The invention will be clarified using comparative examples with the prior art solution.

Example 1: standard prior art solution

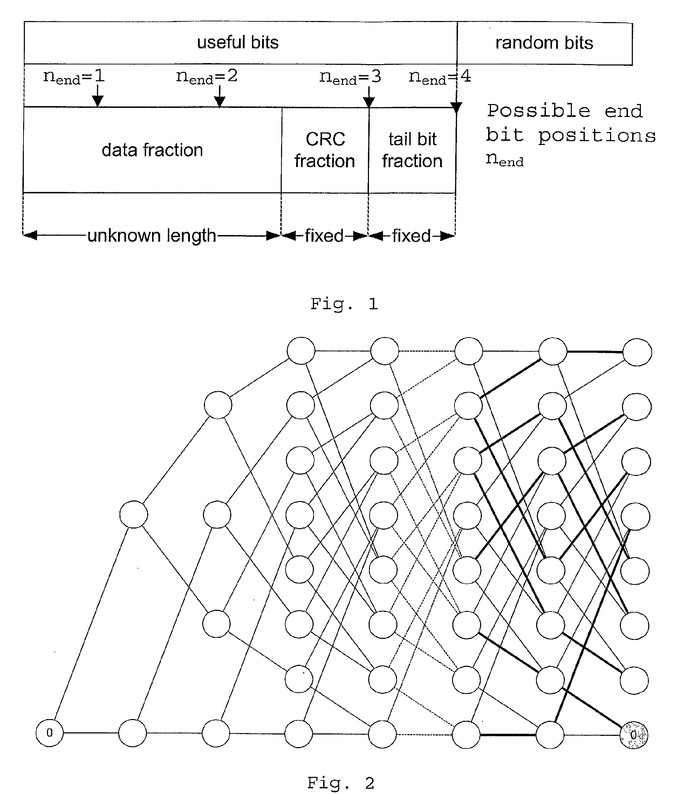

At the transmitter, the data stream with variable number of bits from higher layers is block-encoded using a cyclic redundancy check (CRC) and then convolutionally encoded. CRC parity bits are attached just after the data stream with variable number of bits as shown in figure 1.

The receiver only knows the possible transport formats (or the possible end position $\{n_{end}\}$) by Layer-3 negotiation. The receiver performs Viterbi-decoding on the soft decision sample sequence. The correct trellis path of the Viterbi-decoder ends at the zero state at the correct end bit position.

The blind transport format detection method using CRC traces back the surviving trellis path ending at the zero state (hypothetical trellis path) at each possible end bit position to recover the data sequence. For each recovered data sequence error-detection is performed by checking the CRC, and if there is no error, the recovered sequence is declared to be correct. The decoder trellis diagram can be seen in figure 2.

Symbol explanation:

- $a_0$, $a_{min}$, $a_{max}$: the viterbi algorithm for convolutional codes assigns a cost $a_{state}$ with each state. This cost is a measure of how much the output generated by the cheapest path arriving in this state differs from the given sequence (a path is a sequence of bits that leads to the given state in the trellis diagram; when several paths are possible, only the one with the lowest cost is retained, hence "cheapest"). When a block of data is convolutionally encoded, a fixed number of zeroes is added to this data such that the begin state and end state are known before decoding, i.e. this is the all-zero state, 0-state in short. These added bits are called "tail bits". The costs that are relevant for the algorithm are the maximum cost $a_{max}$, the minimum cost $a_{min}$ and the cost of the 0-state $a_0$.
- $n_{end}$: this is the index to the length the convolutional decoder has to test. These lengths are sorted from low to high in a table. Each length is the sum of the user data length and its CRC length.
- $s\ (n_{end})$: when the generic streaming viterbi algorithm tries to decode a block with the length referred to by $n_{end}$, it will perform that number plus a constant (same as the number of tail bits) state calculating iterations. If there were no errors, the path arriving in the 0-state would be the cheapest path. Due to errors, it is possible that the 0-state is not the cheapest path. So in the following figure, the perfect decoding would end in the 0-state and the associated path (the thick line ending that state) would indicate the decoded data and its tail bits.

In order to make an estimate of how likely it is that the 0-state is the cheapest path and the decoded bits are going to be correct, the following definition was given to the certainty parameter $s\ (n_{end})$:

$$s\ (n_{end}) = -10 \log \frac{a_0\ (n_{end})\ -a_{min}\ (n_{end})}{a_{max}\ (n_{end})\ -a_{min}\ (n_{end})} \qquad [dB]$$

The better the decoding went, the lower the cost of the 0-state will be. Given that the fraction is limited between 0.0 and 1.0, the parameter $s(n_{end})$ will be between 0 dB (worst case value) and minus infinite dB (best case value).

- D: this is a metric that has to be obtained through simulation or test which has to make a trade-off between the number of false accepts and rejects.

In order to reduce the probability of false detection (this happens when the selected path is wrong but the CRC misses the error detection), a path selection threshold D is introduced. The threshold D determines whether the hypothetical trellis path connected to the zero state should be traced back or not at each end bit position $n_{end}$. If the hypothetical trellis path connected to the zero state that satisfies $s\ (n_{end}) \leq D$ is found, the path is traced back to recover the frame data, where D is the path selection threshold and a design parameter.

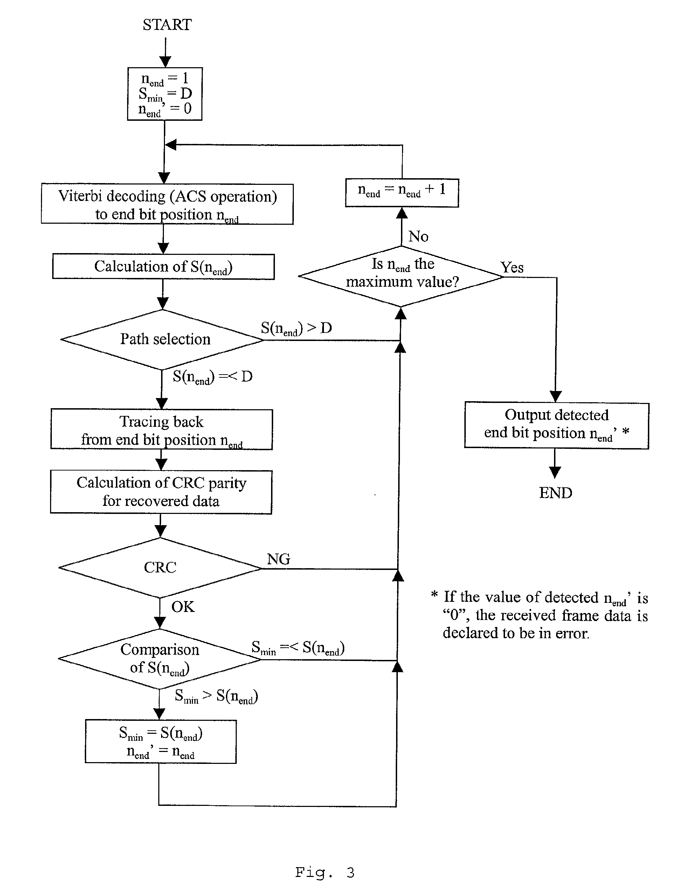

If more than one end bit positions satisfying $s\ (n_{end}) \leq D$ is found, the end bit position which has minimum value of $s(n_{end})$ is declared to be correct (on condition that the CRC test is passed). If no path satisfying $s(n_{end}) \leq D$ is found even after all possible end bit positions have been exhausted, the received frame data is declared to be in error. The prior art procedure is shown as a flow chart in figure 3.

- **Initialisation:**

    $n_{end}$ = indicator of length to be tested, starting with 1.
    $n_{end'}$ = indicator to best length so far, 0 to indicate no valid results yet.
    $S_{min}$ = best metric to be improved upon, should be at least D to start with.

- **Viterbi decoding:**
    This will decode the data stream assuming a length as indicated by $n_{end}$ using the Viterbi algorithm in streaming mode (as opposed to block mode, which is used for known lengths)

- **Calculation of S ($n_{end}$):**
  Getting the cost metrics from the Viterbi algorithm is free. Calculating the fraction and logarithm are very implementation specific. They may be postponed till the comparison of this parameter.

- **Path selection:**
  The complexity comparison will depend on the chosen implementation. The path has to be at least as good as the required minimum level, otherwise the block will be discarded automatically.

- **Tracing back:**
  The bits that make up the cheapest path that lead to the 0-state found by the Viterbi algorithm, form the decoded data and tail bits. The data bits have to be output for further processing. The tail bits may be disposed, as they are not needed.

- **Calculation of CRC:**
  Normally the data will be serially fed into the CRC test circuitry. For speed optimisation, a parallel datastream can also be tested.

- **CRC check:**
  If the CRC test fails, the length under investigation is definitely not going to provide the wished data packet.

- **Comparison of S ($n_{end}$):**
  It makes little sense to keep a result that's not better than the current best. Whether this condition is relaxed to "at least as good as" (slightly favouring longer lengths) and the initial value of $S_{min}$ set to exactly D, is up to the implementer.

- **Adjusting the best result:**
  Obvious.

- **Testing for a longer length:**
  Each length must be tested to be sure that the best is found. One exception is possible: this is when $S_0$ is also $S_{min}$. In this ideal case, the fraction and logarithm don't provide any better alternative. The implementer, however, may choose to test for the largest nominator for these cases, as this may indicate a better separation between the different paths. This has of course to be taken into account in the logic when comparing $S_{min}$ and S ($n_{end}$).

In the prior art solution, for every possible path through the trellis decoder to each possible end bit position where S(n) is less or equal to the threshold D, a CRC decode is done on the data to determine if the sequence is error-free. This solution results in unnecessary CRC decodes of the data, which is immediately discarded if S(n) is for the path greater than S(n) of a previously decoded path. These unnecessary CRC decodes reduce the efficiency of the system and increase the time required to perform the blind detection.

Example 2: blind transport format detection according to the present invention.

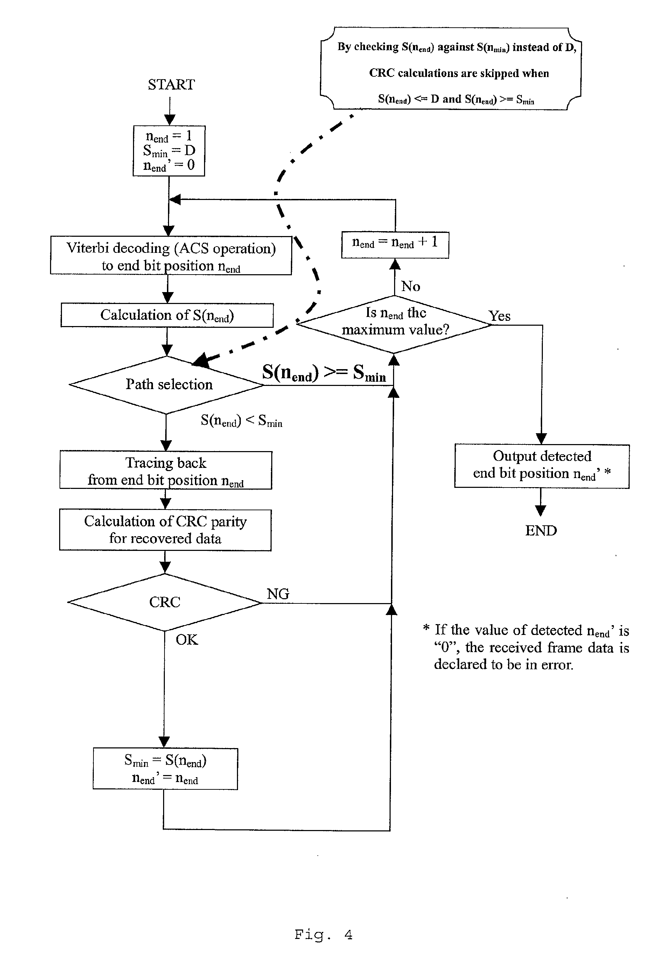

The processing flow according to the present invention is depicted in figure 4.
The present invention implements a blind transport format detection method where the CRC decode is only done on the data for a particular path through the trellis decoder if S(n) for that path is lower than the threshold (D) and also lower than any previously tested path.
An advantage of this method is that a reduction in the number of CRC decodes performed is obtained. In the worst case, there is no reduction of CRC decodes at all, but in the best case only one CRC decoding cycle has to be performed instead of 16 cycles. This means an increased efficiency and a reduction in time needed to perform the blind detection. Since each blind detection algorithm takes less time this is also a reduction of power consumption. Power consumption will be a key issue in $3^{rd}$ generation mobiles so this advantage is very important.
All the steps of initialisation, Viterbi decoding, calculation of $S(n_{end})$, tracing back and CRC parity check are as in example 1. The path selection step and the comparison step of example 1 have been replaced by a new path selection step. By checking $S(n_{end})$ against $S_{min}$ instead of D, CRC calculations are skipped when $S(n_{end}) \leq D$ and S ($n_{end}) \geq S_{min}$.
An alternative way to describe the invention can be formulated. In the case of the prior art, one sets a static threshold value to which all signal path costs are compared. A variable with the minimal signal path cost (and the corresponding end bit position) is kept as the result of the algorithm. In the present invention, the threshold value can be seen as dynamic: it is initialised at the predetermined value D, and is reset to the minimal signal path cost found for all valid signals. This means that all signal path values that lie between the initial value of the threshold D and the current value of the threshold $S_{min}$ will not have to be checked or validated, as they will not provide a better correlation to the received signal.

**Claims**

1. A blind transport format detection method for detecting the transport format of a spread spectrum signal, comprising the steps of:

   - initialising a signal path cost threshold value to a predetermined value D,

- calculating the signal path cost for the minimum end bit position,
- comparing it to the threshold value, and
- in case the signal path cost is lower or equal to the threshold value the method further comprises after the comparing step a signal validation step, and the step of setting a valid end bit position variable to the current end bit position $n_{end}$, and
- repeating the steps of calculating, comparing and optionally validation and valid end bit position variable setting for incremental values of end bit position until the maximal end bit position is reached,

   **characterised in that** the method further comprises the step of setting the threshold value to the calculated signal path cost in case the signal validation step is successful and before incrementing the end bit position.

2. The blind transport format detection method of claim 1, wherein the step of calculating comprises the step decoding the spread spectrum signal.

3. The blind transport format detection method of claim 2, wherein the step of decoding comprises a convolutional decoding step.

4. The blind transport format detection method of claim 3, wherein the convolutional decoding step is a Viterbi decoding step.

5. The blind transport format detection method of any of the claims 1 to 4, wherein the signal validation step comprises a CRC test.

6. A computer program product for detecting the transport format of a spread spectrum signal, arranged to be executed on a computer, comprising:

- Means for initialising a signal path cost threshold value to a predetermined value D,
- Means for calculating the signal path cost for the minimum end bit position
- Means for comparing it to the threshold value, and
- Means for performing a signal validation step,
- Means for setting a valid end bit position variable to the current end bit position $n_{end}$, and
- Means for incrementing the end bit position,

   **characterised in that** the software program product further comprises means for setting the threshold value to the calculated signal path cost before incrementing the end bit position in case the signal validation step is successful.

7. Integrated circuit comprising means for executing all the steps of the method as in any of the claims 1 to 5.

8. Receiver for IMT-2000 spread-spectrum signals comprising means for executing all the steps of the method as in any of the claims 1 to 5.

| useful bits | | | | random bits |
|---|---|---|---|---|

$n_{end}=1$   $n_{end}=2$   $n_{end}=3$   $n_{end}=4$

| data fraction | CRC fraction | tail bit fraction |
|---|---|---|

Possible end bit positions $n_{end}$

←————unknown length————→ ←fixed→ ←fixed→

Fig. 1

Fig. 2

START

$n_{end} = 1$
$S_{min} = D$
$n_{end}' = 0$

Viterbi decoding (ACS operation)
to end bit position $n_{end}$

Calculation of $S(n_{end})$

Path selection

$S(n_{end}) > D$

Tracing back
from end bit position $n_{end}$

Calculation of CRC parity
for recovered data

$S(n_{end}) =< D$

CRC

NG

OK

Comparison
of $S(n_{end})$

$S_{min} =< S(n_{end})$

$S_{min} > S(n_{end})$

$S_{min} = S(n_{end})$
$n_{end}' = n_{end}$

$n_{end} = n_{end} + 1$

No

Is $n_{end}$ the
maximum value?

Yes

Output detected
end bit position $n_{end}'$ *

END

* If the value of detected $n_{end}'$ is
"0", the received frame data is
declared to be in error.

Fig. 3

START

$n_{end} = 1$
$S_{min} = D$
$n_{end}' = 0$

By checking $S(n_{end})$ against $S(n_{min})$ instead of D,
CRC calculations are skipped when
$S(n_{end}) <= D$ and $S(n_{end}) >= S_{min}$

Viterbi decoding (ACS operation)
to end bit position $n_{end}$

Calculation of $S(n_{end})$

$n_{end} = n_{end} + 1$

No

Is $n_{end}$ the
maximum value?

Yes

Path selection

$S(n_{end}) >= S_{min}$

$S(n_{end}) < S_{min}$

Tracing back
from end bit position $n_{end}$

Calculation of CRC parity
for recovered data

Output detected
end bit position $n_{end}'$ *

END

CRC

NG

OK

$S_{min} = S(n_{end})$
$n_{end}' = n_{end}$

* If the value of detected $n_{end}'$ is
"0", the received frame data is
declared to be in error.

Fig. 4

8

European Patent
Office

**EUROPEAN SEARCH REPORT**

Application Number

EP 02 25 5316

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 207 659 A (NTT DOCOMO INC) 22 May 2002 (2002-05-22) * abstract * * column 13, line 39 - line 43 * * column 16, line 46 - column 17, line 46 * * figures 9A,9B * | 1-8 | H04L1/00 |
| X | EP 1 187 343 A (SONY CORP) 13 March 2002 (2002-03-13) * the whole document * | 1-8 | |
| A | OKUMURA Y ET AL: "VARIABLE-RATE DATA TRANSMISSION WITH BLIND RATE DETECTION FOR COHERENT DS-CDMA MOBILE RADIO" IEICE TRANSACTIONS ON COMMUNICATIONS, INSTITUTE OF ELECTRONICS INFORMATION AND COMM. ENG. TOKYO, JP, vol. E81-B, no. 7, 1 July 1998 (1998-07-01), pages 1365-1372, XP000790169 ISSN: 0916-8516 * section 2.2 * | 1-8 | TECHNICAL FIELDS SEARCHED (Int.Cl.7) H04L |

The present search report has been drawn up for all claims

| Place of search | Date of completion of the search | Examiner |
|---|---|---|
| THE HAGUE | 27 January 2003 | Toumpoulidis, T |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**                    EP 02 25 5316

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2003

| Patent document cited in search report | | Publication date | Patent family member(s) | | Publication date |
|---|---|---|---|---|---|
| EP 1207659 | A | 22-05-2002 | JP | 2002158642 A | 31-05-2002 |
| | | | CN | 1354574 A | 19-06-2002 |
| | | | EP | 1207659 A2 | 22-05-2002 |
| | | | US | 2002075964 A1 | 20-06-2002 |
| EP 1187343 | A | 13-03-2002 | JP | 2002077121 A | 15-03-2002 |
| | | | EP | 1187343 A2 | 13-03-2002 |
| | | | US | 2002051505 A1 | 02-05-2002 |

EPO FORM P0459

For more details about this annex : see Official Journal of the European Patent Office, No. 12/82